## Europäisches Patentamt

## European Patent Office

## Office européen des brevets

(11) Publication number: **0 347 414**
**B1**

(12) **EUROPEAN PATENT SPECIFICATION**

(45) Date of publication of patent specification: **03.10.90**

(21) Application number: **88901434.6**

(22) Date of filing: **09.02.88**

(86) International application number:
**PCT/GB88/00074**

(87) International publication number:
**WO 88/06257 25.08.88 Gazette 88/19**

(51) Int. Cl.⁵: **F 23 R 3/04**

(54) **GAS TURBINE ENGINE COMBUSTION CHAMBERS.**

(30) Priority: **11.02.87 GB 8703101**

(43) Date of publication of application:
**27.12.89 Bulletin 89/52**

(45) Publication of the grant of the patent:
**03.10.90 Bulletin 90/40**

(84) Designated Contracting States:
**DE FR GB IT NL SE**

(56) References cited:
**FR-A-2 294 330**
**GB-A-1 575 641**
**GB-A-2 044 912**
**GB-A-2 053 450**
**US-A-3 899 882**
**US-A-4 004 056**
**US-A-4 132 066**
**US-A-4 392 355**

(73) Proprietor: **The Secretary of State for Defence in Her Britannic Majesty's Government of the United Kingdom of Great Britain and Northern Ireland Whitehall**
**London SW1A 2HB (GB)**

(72) Inventor: **TILSTON, John, Ronald**
**Brookside Cottage**
**Dippenhall Farnham Surrey GU10 5DL (GB)**

(74) Representative: **Beckham, Robert William et al**
**Procurement Executive Ministry of Defence**
**Room 2016 Empress State Building Lillie Road**
**London SW6 1TR (GB)**

Courier Press, Leamington Spa, England.

# EP 0 347 414 B1

**Description**

This invention relates to the technical field of combustion chambers for gas turbine engines and especially, but not exclusively, for such engines as are used for aeronautical or marine propulsion. It concerns especially the means for cooling the containing walls of such chambers. (see e.g. US—A—4 392 355).

There is an obvious desire to improve the efficiency of all engines as reflected in specific fuel consumption (fuel consumption per unit thrust) and at the same time to improve component life and service intervals. In the field of gas turbine engines improved specific fuel consumption can be achieved by increasing cycle temperatures and/or by reducing the drain on the engine which is imposed by bleeding air for component cooling. However such improvement will be obtained at the expense of reduced component lives unless component materials or cooling arrangements can be improved to compensate.

In a modern gas turbine engine the material from which the flame encasement is made will have a maximum temperature capability well short of the temperatures generated by the combustion of the fuel — say 1000°C against 2000°C plus. Thus combustion chamber wall cooling is conventional. Such techniques as forced convection, film cooling, effusion cooling, impingement cooling, transpiration cooling and pseudo-transpiration cooling (using proprietary laminated materials) are well documented in the literature of the field of this invention. All of the wall cooling techniques mentioned above rely on air taken from the output of the high pressure compressor stage as the coolant. The total output of this compressor is dependent inter alia on the power input to it and so the total amount of high pressure air available cannot grow save at the expense of increased compressor power drain. The available air is not utilised for combustion chamber cooling alone. Sufficient air for each of the three following tasks must be found from within the limited amount of air available. These tasks are:- support of combustion within the primary zone of the combustion chamber; cooling of the combustion gases prior to exit to the turbine by dilution within the dilution zone of the combustion chamber; and cooling both the combustion chamber walls and components within the turbine. In existing combustion chambers if, instead of increasing the overall provision of high pressure air, the air is reapportioned to provide more for wall cooling it will have undesirable consequences. If air is diverted from the combustion process to wall cooling there is usually a penalty of unacceptable smoke emissions. If alternatively air is diverted from the highly optimised dilution process to wall cooling then it is likely that the dilution process will be much less effective and increased turbine inlet temperature or hotspots within the turbine inlet stream will be reflected in drastically reduced life for turbine components. Moreover, in prior art combustion chambers, an increase in the provision of air for wall cooling purposes is of itself undesirable for reasons unconnected with any shortfall in the provision for the other tasks. The wall cooling air is discharged into the combustion chamber at points predicated upon cooling requirements. Under some circumstances an increased discharge introduces excess air to the combustion with consequences such as increased smoke; emissions of unburnt fuel and reduction in combustion stability. If the air is discharged into regions of the combustion chamber containing excess unburned fuel the additional air can encourage local combustion and lead to hotter walls.

These factors have led to a preoccupation in the art with such methods of cooling combustion chamber walls as require minimal provision of cooling air. Despite improvements in such methods the combustion chambers of many current high performance engines have inadequate endurance because of excessive wall temperatures.

This invention stems in large measure from the realisation that there is no need to consider an increase in that proportion of the high pressure compressor delivery air which is used in cooling the primary zone of the combustion chamber as detrimental to other aspects of the engines durability or performance if that increase is found from within the portion otherwise used for support of combustion within the primary zone and providing also that this cooling air can be used effectively in support of combustion once it has served its cooling function. These two provisos cannot be satisfied by an increased provision of cooling air for any of the prior art wall cooling methods for the air exit arrangements hitherto adopted tend to disrupt rather than enhance the combustion process.

We have found that it is possible to use a combustion chamber wall cooling arrangement which accommodates an increased through-flow of cooling air and which provides for efficient use of that through-flow in support of the combustion process without any of the undesirable quenching mentioned above. We have found also that our invention can circumvent one other problem found with certain of the prior art combustion chambers. This problem is that of chamber cracking caused by thermal cycling in prior art laminated wall constructions having localised areas of weakness where overlying cooling passages thin the wall section. Our combustion chamber can be made from solid single layer material and can be configured so as to avoid any crossing of cooling air passages.

We believe that we can apply our invention to the dilution zone of the combustion chamber in addition to the primary combustion zone. When applied to the dilution zone the additional air for wall cooling will be found from within the portion allocated for dilution cooling of the combustion gases and this wall cooling air will be utilised for dilution purposes once it has served its wall cooling purpose.

A brief description of conventional gas turbine engine combustion chambers is given below in order to set our invention in context and provide a clear definition of the terms used in defining that invention.

There are three established configurations for combustion chambers in current gas turbine engines.

2

These are the multiple chamber configuration, the annular chamber configuration and the tubo-annular configuration. In engines of the multiple chamber type there is a ring of separate combustion chambers each linked to a manifold at the output of the high pressure compressor stage. Each combustion compartment has its own individual flame casing and pressure casing, the flame casing lying within the pressure casing. One or more of the combustion chambers is provided with an igniter and the combustion chambers are each linked to their neighbouring combustion chambers by an interconnecting passage for equalisation of pressures and combustion propogation at ignition. In engines of the annular chamber type there is one annular flame casing and one pressure casing encompassing the flame casing. The pressure casing is connected directly to the outlet of the high pressure compressor. Engines of the tubo-annular type have a single annular pressure casing but within this pressure casing there is a ring of individual combustion compartments each defined by a flame casing. The combustion compartments are interconnected as in the multiple chamber configuration.

In engines of each of these three types the arrangements for combustion and dilution are somewhat similar. There a divergent head wall portion of the flame casing and within and adjacent this is a stabilised zone of recirculatory flow within which the flame is established and stabilised. We term this the primary zone. The recirculatory flow within the primary zone may in part be established by a bluff body or by swirl vanes however it is usually established in large measure if not in total by the way in which the air which supports the combustion is introduced into the primary zone. Some of the air is introduced to the primary zone at a position close to the centre point of the head wall and this may serve to carry or disperse vapourised or atomised fuel. A significant portion of the air is introduced through holes in the head wall or through holes in the flame casing in that portion of the next downstream section (which we term the flame tube) adjacent to head wall. Downstream of primary zone, but still within that which we term the flame tube, is that which we term the secondary zone. Here further air is introduced at the downstream end of the region of recirculatory flow and this air contributes to the combustion process as it is carried to the combustion region by the recirculation. Downstream again is that region within the flame casing which we term the dilution zone where additional air is provided to cool by dilution the hot gases created by the combustion process to a temperature sufficiently low for the components of the next downstream stage of the engine, the turbine, to withstand. This dilution air is provided through holes in the flame casing within the dilution zone. These aim to ensure adequate jet penetration into the stream of hot gas and sufficient distribution of the cooling air to avoid as far as possible any hot spots within the stream.

In the primary zone, the secondary zone and in the dilution zone air which supports combustion, stabilises the flame or dilutes the hot gases, as the case may be, is introduced to the interior of the flame casing by virtue of the compressor delivery pressure held within the combustion chamber pressure casing through holes in the flame casing. These holes must be of a significant size. In the primary and secondary zones where the discharge enters fuel rich gases the hole size must be adequate to ensure an adequate jet penetration before jet breakdown in order to keep the flame an adequate distance from the flame casing for avoidance of overheating. In the dilution zone the ability of the cool discharge jet to penetrate the hot gas stream is related not only to the velocity of the discharged air but also to the diameter of the discharge hole. In order, therefore for the dilution jets efficiently and uniformly to mix with and cool the combustion gases it is necessary for the dilution air ports to be suitably close together and of sufficiently large size to allow adequate penetration of the dilution air into the hot gas flow. The holes are carefully positioned coordinated and sized so that the discharged air performs its desired task. We term these holes in the flame casing air inlet ports.

In the prior art combustion chamber the air that is used for cooling the flame casing may be discharged into the primary secondary or dilution zones. In the wall cooling arrangements known as transpiration or pseudo-transpiration cooling the air enters the interior of the flame casing at myriads of points. Should the air discharge into a fuel rich region it may establish numerous small flames close to the surface of the flame casing but it makes no significant contribution to the overall flame stabilisation or combustion process. Air discharged as film cooling air (through slots or the like aligned along the wall surface) in those combustion chambers utilising this cooling method also serves no purpose with regard to flame stabilisation or combustion. We do not include the discharge arrangements for these prior art cooling schemes within the term air inlet ports.

One further area of clarification might be useful. In our patent (GB 1575641) there is disclosed a form of combustion chamber for which the present invention is especially suited. In such combustors the head wall of the flame casing is pierced by numerous air inlet ports which provide a well distributed supply of air to the primary zone, and a vapourised or atomised fuel/air mixture is directed from a central injector into the mixing zone, of the air jets. The air jets provide the mixing energy and pin the mixing regions. The distributed configuration of the jets coupled with the coordinated sizing of the inlet ports gives volume stabilisation. It should be noted that the whole lay out and the means by which the fuel is mixed with the air from the inlet ports may differ in detail from that disclosed in the above mentioned patent within the scope of the description given here. We term such combustion chambers pepperpot combustors.

Our invention is a combustion chamber for a gas turbine engine having at least one flame casing within a pressure casing and an air space therebetween, air inlet ports in the flame casing for the provision of air to its interior for support of combustion or for flame stabilizing or for dilution of hot gases, and wall cooling means extending over at least a limited area of the flame casing in which area there is a dispersion

3

of the air inlet ports; characterized in that the wall cooling means comprises a field of discrete wall cooling passages arranged in arrays, each individual array of wall cooling passages being centred on and disposed about a respective air inlet port, the overall disposition of the field being such that the individual arrays abut or interleave neighbouring arrays, and each individual wall cooling passage following an oblique path through the wall of the flame casing between an entrance at the exterior of the flame casing and an exit within a respective air inlet port; wherein the exit air from each array of wall cooling passages contributes to or wholly constitutes the discharge from its associated air inlet port.

This invention releases for use in wall cooling a previously untapped source of supply by using combustion or dilution air for wall cooling without detriment to its subsequent use for its original purpose. It follows that the wall cooling configuration need no longer be constrained by a requirement to minimise the required airflow. This leads to an arrangement having fewer but wider cooling passages than the prior art pseudo-transpiration arrangement and avoids the need for structures produced by shaping prelaminated materials. The flame casing of the combustion chamber, at least in difficult areas such as the head wall may be produced in a single layer material and produced by a method which avoids creation of forming stresses. It is likely that the head wall portion could be produced as a casting with cast-in cooling channels. Alternatively the head wall could be produced by machining cooling passages into a solid cone shaped or hemispherical solid. Yet another method would be to produce a solid head wall (either pre-drilled with air inlet ports or drilled with these afterwards) then plasma spray the external surface with metal on top of a removable masking configured to the desired lay-out of cooling passages. All these methods avoid rolling or pressing pre-laminated materials with built-in zones of weakness so it can be expected that the resultant head wall will have improved structural integrity.

The cooling passages need not accommodate the whole of the airflow to the air inlet ports. In one embodiment of the invention at least some of the air inlet ports are fed by a direct passage through the flame casing as well as by the obliquely extending cooling passages.

In one presently preferred embodiment of the invention the air inlet ports each include a direct passage through the flame casing which leads to an abruptly enlarged zone at the exit, and the respective obliquely extending cooling passages discharge into this zone. This abrupt change in section creates a region of low pressure at the exit from the cooling passages which assists in avoiding any choking of flow through the cooling passages which might result from back pressure.

It might be of advantage to control the exit stream from at least some of the primary air discharge ports by introducing swirl into that stream. In a configuration designed to achieve this the obliquely extending cooling passages are arranged in a swept radial pattern.

As mentioned previously the invention is especially relevant to combustors of the pepperpot type. In such combustors head wall cracking caused by thermal fatigue can be a problem in such prior art combustors where the head wall is made of laminated pseudo-transpiration cooled material. Moreover the distribution of air inlet ports over the surface of the head wall portion of a pepperpot flame casing means that this is a fertile area for seeking improved cooling through use of the invention in addition to a separate goal of improved structural integrity. The invention is described below in the context of improved head walls for pepperpot combustion chambers by reference to particular embodiments of the invention illustrated in the drawings, of which

Figure 1 is a partial view in longitudinal section of a tubo-annular combustion chamber;

Figure 2 is a partial axial view of the same;

Figure 3, 4, 5, 6 and 7 show other embodiments of the invention.

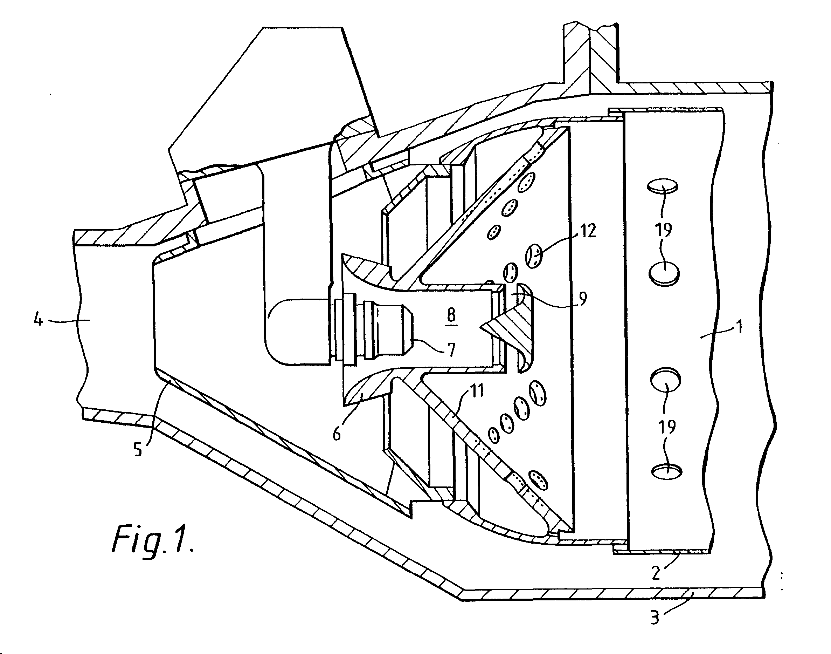

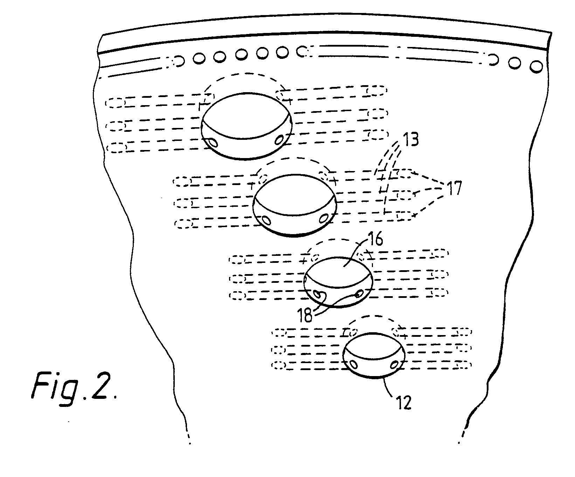

The view shown in Figure 1 represents a local section through a combustion chamber 1 of tubo-annular form at a location where the section encompasses both the pressure casing 3 and one of the flame casings designated 2. There are several such flame casings 2 within the pressure casing 3 at spaced locations. The pressure casing 3 is mounted at the exit annulus 4 of an axial compressor stage (not shown) and it accommodates the whole of the compressor delivery air and isolates this from adjacent parts of the engine. Within the pressure casing 3 at the head of the combustion chamber 1 there is a hollow snout 5 which serves to divide the compressor delivery airstream into two portions and to direct the captured portion towards the flame casing 2. At the head of flame casing 2 there is a head wall 11 of conic form which defines therewithin a divergent lead-in to the main zone. At the centre of this conic head wall 11 there is mounted a fuel injector 6 which comprises a fuel spray nozzle 7, an injector air passage 8 and an injector outlet 9. The conic end wall 11 is pierced by a field of primary air inlet ports 12. The field of inlet ports 12 comprises ten rows of ports arranged in a swathed pattern. One swathe of this field is illustrated in more detail in Figure 2. The swathes each includes four inlet ports 12 save for those swathes interrupted by the combustion chamber igniter in those flame casings having such. The inlet ports 12 are graduated in size within each swathe from the smallest which is innermost to the largest which is outermost. Each inlet port 12 comprises a direct passage 16 through the end wall 11 and also a respective array of passages 13 each of which extends obliquely through the head wall 11 from an inlet 17 to an outlet 18 which is within the inlet port 12. The passages 13 serve as cooling passages for the head wall 11 in a manner which will be explained below, and each inlet port 12 has its own array of cooling passages 13 which serve to cool a surrounding region of the end wall 11. The arrays of cooling passages 13 for each inlet port 12 within a swathe and the general disposition of the swathes is such that heat may be extracted from the end wall 11, in a tolerably uniform manner, over the region of the end wall 11 encompassed by the field of the inlet ports 12.

In operation of the tubo-annular combustion chamber shown in Figures 1 and 2, most of the compressor delivery air captured by the snout 5 is directed towards the head of the flame casing 2. A portion of this air flows through the injector air passage 8 and mixes with the fuel stream issuing from spray nozzle 7. The resultant mixture is discharged in radial directions from the injector outlet 9 towards the inside surface of head wall 11. Further compressor delivery air is provided to the interior of the flame casing 2 to support the combustion processes therein, from the primary air inlet outlets 12. The primary air which issues from each outlet 12 is the sum of the flows passing through the respective direct passage 16 and the respective array of cooling passages 13. This parallel flow is of course established by the pressure difference across the end wall 11 and the air which flows is at or near compressor delivery temperature which is considerably lower than the temperatures generated in the combustion zone. Thus a portion of the primary air serves to cool the head wall 11 by heat exchange therewith in passage through cooling passages 13. In the adjacent portion of the flame casing 2 downstream of the headwall further primary air inlet ports are present. These are designated 19 in Figure 1. They serve to provide additional combustion air from that portion of the airstream outside the snout 5 and flame casing 2. These ports 19 may also be provided with oblique cooling passages (not shown) but alternative conventional film cooling might be adequate for cooling the flame casing 2 in this zone. Further downstream in the combustion chamber 1 there is a conventional dilution zone (not shown) in which further compressor delivery air is introduced to the interior of the flame casing 2 to cool the combustion products by dilution.

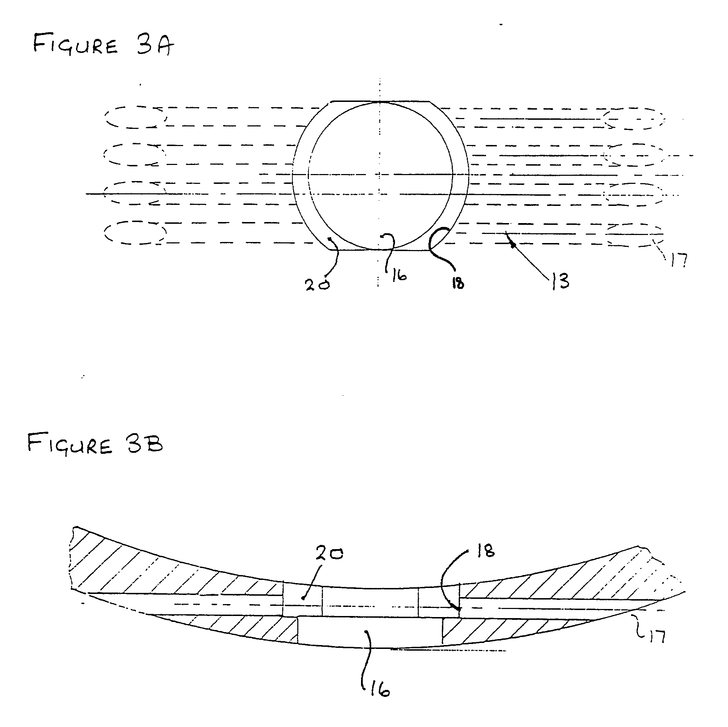

Figures 3A and 3B show in plan and sectional views respectively a modified version of the cooling passage/discharge port configuration. The section is a transverse section through the head wall 11 and the plan view is one of the cone surface from an aspect normal to that surface-not normal to the axis of the flame casing 2. In this alternative configuration the outlets 18 of the cooling passages 13 are located within an abruptly enlarged zone 20 of the inlet port 12. This abruptly enlarged zone 20 creates a region of low pressure adjacent the outlets 18 and assists in ensuring an adequate air flow through the cooling passages 13. The zone 20 does not extend around the whole periphery of the discharge ports 12 in the configuration depicted but this limitation is not an essential feature of a stepped port design.

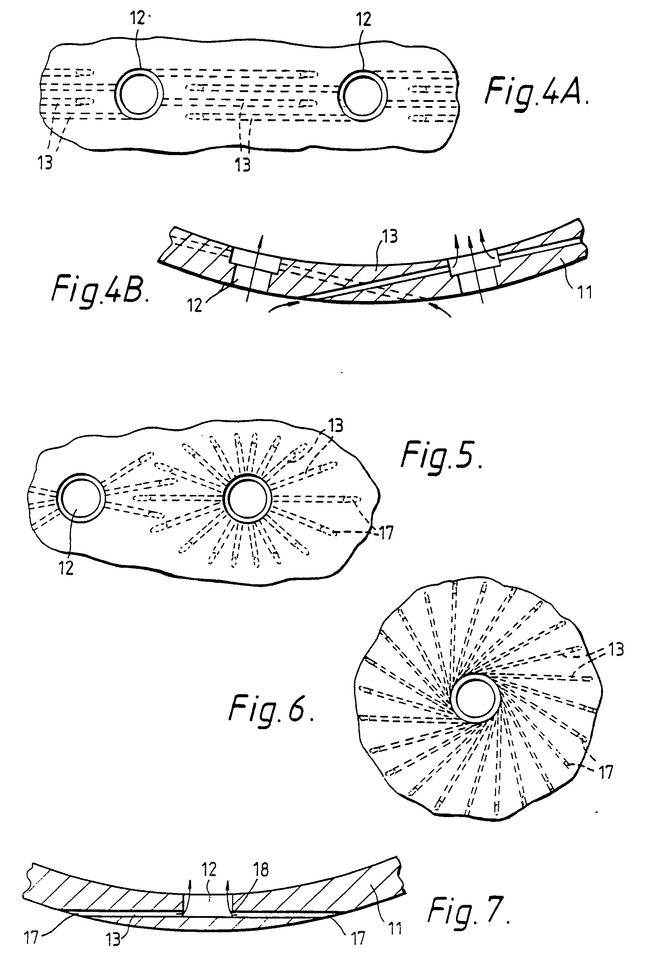

Figures 4A and 4B show respectively an 'unwrapped' plan and a sectional view of a linear field cooling configuration in which the cooling passages 13 of circumferentially proximate inlet ports 12 are interleaved to provide a more evenly spread cooling capacity.

Figure 5 shows an 'unwrapped' plan of an interleaved radial array cooling passage arrangement.

Figure 6 shows an 'unwrapped' plan of a cooling passage arrangement in which the cooling passages describe a spiral pattern. This arrangement may be used in order to produce a swirl component in the primary airflow issuing from the inlet port 12.

Figure 7 shows a sectional view of an arrangement in which the air inlet port 12 does not include a direct through passage of the type indicated at 16 in previous Figures. In this arrangement all the air discharged through port 12 is supplied by the cooling passages 13. The array of cooling passages 13 may be as in any of the patterns described above.

The above mentioned Figures and the description given therewith depict various cooling passage arrays as applied to a particular tubo-annular combustion chamber. Similar arrays can be adopted in both individual chamber and annular chamber engines in the head wall zones and further downstream also. The various arrays depicted could be used in various combinations to provide good coverage for the combustion chamber surface they serve.

The effectiveness of the new combustion chamber, in regard to both wall cooling and combustion, has been established in a comparative test. The flame casing design which was used for the test was not that used in the commercial engine but a research design of the pepperpot variety. Three different flame casings were tested in this combustion rig. All were of common design save in regard to the head wall. The head walls had a common base configuration — that is in regard to overall dimensions and provision of air inlet ports — but had different provisions for head wall cooling. The head walls were identical to that shown in Figure 1 save for cooling configurations. The disposition of the flame casing within the part-annular pressure casing and the fuel injection arrangements were also as shown in Figure 1. The base design for the head wall was formed by rolling a sheet of Transply (registered trademark) laminate into a cone then side welding the rolled shape. This design relied on the pseudo-transpiration cooling passage network provided within the Transply sheet. The second design was an uncooled head wall of material machined to shape from the solid. The third design utilised the present invention. This head wall was again one machined to shape from the solid. Cooling passages were provided by drilling or spark eroding this cone, and the cooling passages together with the inlet ports were of the form depicted in Figures 3A and 3B. There was no attempt to provide interleaved coverage of cooling passages so each swathe of inlet ports drained cooling passages covering a respective band of head wall. The layout of cooling passages with regard to the cone was as depicted in Figure 2. The head wall in this construction was produced in Nimonic 75 a commercial nickel based superalloy. The wall thickness was 3 mm and the cooling passages were of 1 mm diameter. The inlet ports varied in size across each swathe between 5.25 mm diameter at the innermost port to 7.5 mm diameter at the outermost port. Several factors influenced the design adopted for this head wall and these should be taken into account when considering the results of the comparative trial. The starting point for the new design was to achieve the same cooling flow rate as achieved with the state of art design in Transply material so that the cooling effectiveness of the new design under comparable flow conditions could be ascertained. This of course meant that the new design did not take benefit from the increased cooling flow rate that would be possible with this design. A second reason for retaining the same cooling flow rate as the Transply design was to preserve commonality between these two designs in respect of combustor pressure loss and combustion conditions in order to give confidence in the validity of combustion performance comparisons made from the test results. It should be noted also that the new head wall being a one off item manufactured for research purposes could not take benefit from high technology production methods suitable for volume production. The cooling passages were not produced using those techniques mentioned earlier in this specification but variously by drilling or spark erroding the conic head wall. As a consequence of this method of manufacture it was not possible to drill the cooling passages at an angle sufficiently oblique to give abutting or interleaved cooling coverage between adjacent arrays of cooling passages. In practice there was a relatively uncooled zone between adjacent arrays which impaired the overall effectiveness of the cooling.

Each of the different flame chambers was tested separately within the sector combustor rig over a range of conditions intended to simulate engine performance between idle and 18 MW, by controlling the air mass flow, air pressure, and fuel feed. The 18 MW figure represents the overall output level of an engine with 10 combustion compartments within the annular pressure chamber. In practice for an engine to achieve this power output each combustion compartment must supply considerably more than 1.8 MW to take into account the low efficiency in absolute terms of a gas turbine engine. Our test covered a individual combustion compartment power output up to approximately 5 MW.

Two separate performance aspects were evaluated. One using temperature sensitive paints provided a crude temperature contour map and thus yielded an indication of the effectiveness of the wall cooling. The second evaluation covered combustion performance. The results of these separate evaluations are presented and discussed below.

The baseline for comparison in regard to cooling performance is the state of art pseudo-transpiration head wall. For this component the paint indicated overall temperatures in the hottest region of the head wall (which is dictated by combustion chamber geometry) in the region 700-840°C. However within this region there is a pattern of small intense hot spots and cool spots which are a consequence of the hole and passage pattern of the Transply material and contribute to the aforementioned problems of thermomechanical fatigue in components such as a head wall. Save for this variation in temperature on a local level and its consequential problems the cooling performance of the Transply head wall is acceptable. A solid uncooled head wall has been considered as an alternative to the Transply head wall for avoidance of the structural problems. However for such a component the peak hot spot temperatures were found to exceed 1050°C which is likely to be unacceptable in components fabricated from conventional flame casing materials. The performance of the new design of head wall within the area covered by its cooling passage arrays was comparable to that produced by the Transply head wall yielding hot spot temperatures in the range 700-840°C but was without the pattern of intense variation of temperatures at the local level which is a feature of the prior art head wall. In the land portions between adjacent cooling arrays — still within the hottest region of the head wall — the peak temperature was found to be between 870 and 1020°C. There is thus a pattern of variation in temperature (within the hottest region) on a gross scale corresponding to the boundaries of effectiveness of the cooling passage arrays. This pattern of variation should be avoidable if the cooling passages are configured to provide a abutting or interleaved coverage as required by this invention. The direct contrast between adjacent cooled zones and uncooled zones gives a measure of the effectiveness of the basic system.

The combustion performance evaluation of the three flame casings covered inter alia idling efficiency, smoke generation and exit temperature patterns. The idling efficiency, being the combustion efficiency under idling conditions, is calculated by subtracting a calculated waste heat figure (based on analysis of exhaust composition) from a calculated potential heat figure derived from the calorific value of the fuel and the fuel flow rate. Smoke generation is measured by a filtration technique and is quantified by Bacharach number. The effectiveness of the dilution process within the flame casing is reflected in the temperature profile across the exit of the casing. This temperature profile is important because it quantifies the thermal conditions experienced at the inlet to the turbine stage. Two figures are provided for each of the three designs of flame casing. The first of these is the overall temperature distribution factor (OTDF) measured at full power output and expressed as a percentage. The OTDF is defined as follows:-

$$\text{OTDF (\%)} = (T_1 - T_2)/(T_2 - T_3) \times 100$$

where: $T_1$ is the peak point exit temperature; $T_2$ is the average point exit temperature and $T_3$ is the inlet temperature.

The second temperature profile figure is a circumferentially based figure intended to represent the most severe exposure at any point on a rotating turbine component as it traverses the exit stream in terms of accumulated exposure to elevated temperature. The appropriate factor is the radial temperature distribution factor (RTDF) — again measured at full power output and expressed as a percentage. The RTDF is defined as follows:-

$$\text{RTDF (\%)} = (T_4 - T_2)/(T_2 - T_3) \times 100$$

6

where $T_2$ and $T_3$ are as before and $T_4$ is the highest average exit temperature along any radial path across the exit plane.

The combustion performance of the three flame casings is given in the table below.

| | Idling Efficiency(%) | OTDF(%) | RTDF(%) | Full Power Smoke |
|---|---|---|---|---|
| Solid Head Wall | 98.9 | 19.7 | 6.7 | 3.15 |
| Transply Head Wall | 98.4 | 21.7 | 5.6 | 4.0 |
| New Head Wall | 98.8 | 21.5 | 5.9 | 0.72 |

It will be seen that the head wall made to the new design matches the combustion performance of the others in all respects and exceeds that of the others in terms of smoke generation at full power. Regarding the latter property we would caution that the figures for all the flame casing types is very low so the degree of improvement secured by the invention might not be as significant as might be expected although of course any improvement in this regard would be welcome.

**Claims**

1. A combustion chamber for a gas turbine engine having at least one flame casing (2) within a pressure casing (3) and an air space therebetween, air inlet ports (12) in the flame casing for the provision of air to its interior for support of combustion or for flame stabilizing or for dilution of hot gases, and wall cooling means (13) extending over at least a limited area of the flame casing in which area there is a dispersion of the air inlet ports; characterized in that the wall cooling means comprises a field of discreet wall cooling passages (13) arranged in arrays, each individual array of wall cooling passages being centred on and disposed about a respective air inlet port (12), the overall disposition of the field being such that the individual arrays abut or interleave neighbouring arrays, and each individual wall cooling passage (13) following an oblique path through the wall (11) of the flame casing between an entrance (17) at the exterior of the flame casing (2) and an exit (18) within a respective air inlet port (12); wherein the exit air from each array of wall cooling passages contributes to or wholly constitutes the discharge from its associated air inlet port.

2. A combustion chamber as claimed in claim 1 further characterized in that each air inlet port upon which an array of wall cooling passages is centred has a zone of abruptly enlarged cross section (20) adjacent its exit and wherein the wall cooling passages discharge into this zone within a respective air inlet port, the arrangement being such as to avoid any choking of the wall cooling passages caused by backpressure.

3. A combustion chamber as claimed in claim 1 further characterized in that each air inlet port (12) upon which an array of wall cooling passages (13) is centred is devoid of a direct passage through the flame casing such that the discharge of the respective array of wall cooling passages (13) constitutes the whole discharge from that inlet port (12).

4. A combustion chamber as claimed in any one of claims 1 to 3 further characterized in that the field of discrete wall cooling passages (13) is within the head wall portion of the flame casing (2).

5. A combustion chamber as claimed in claim 4 further characterized in that the combustion chamber is one of the pepperpot type.

6. A combustion chamber as claimed in any one of claims 1 to 5 further characterized in that the arrays of wall cooling passages (13) each comprise two opposed banks of parallel linear passages, one to each side of the respective air inlet port.

7. A combustion chamber as claimed in any one of claims 1 to 5 further characterized in that the arrays of wall cooling passages (13) each comprise a spoked configuration centred on a respective air inlet port.

8. A combustion chamber as claimed in claim 7 further characterized in that the spoked arrays describe a spiral pattern.

# EP 0 347 414 B1

## Patentansprüche

1. Brennkammer für eine Gasturbine mit mindestens einem Flammengehäuse (2) innerhalb eines Druckgehäuses (3) und einem dazwischen liegenden Luftraum mit Lufteinlaßöffnungen (12) im Flammengehäuse für die Luftzufuhr in dessen Innenraum zur Unterstützung der Verbrennung oder zur Flammenstabilisierung oder zur Verdünnung der heißen Gase und mit einer Wandkühlungseinrichtung (13), die sich über mindestens einen begrenzten Bereich des Flammengehäuses erstreckt, wobei die Lufteinlaßöffnungen in diesem Bereich verteilt sind,
dadurch gekennzeichnet, daß
die Wandkühlungseinrichtung ein Feld von getrennten in Reihen angeordneten Wandkühlkanälen (13) aufweist, wobei jede einzelne Reihe von Wandkühlkanälen auf eine jeweilige Lufteinlaßöffnung (12) zentriert und um diese herum angeordnet ist, wobei die Gesamtanordnung des Feldes so ausgelegt ist, daß die einzelnen Reihen an die Nachbarreihen anstoßen oder diese überschneiden und wobei jeder der einzelnen Wandkühlkanäle (13) schräg durch die Wandung (11) des Flammengehäuses zwischen einem Eintritt (17) an der Außenseite des Flammengehäuses (2) und einem Austritt (18) innerhalb einer entsprechenden Einlaßöffnung (12) verläuft, wobei die Austrittsluft aus jeder Reihe von Wandkühlkanälen einen Teil zur Auslaßmenge beiträgt oder die gesamte Aulaßmenge von seiner zugehörigen Lufteinlaßöffnung bildet.

2. Brennkammer nach Anspruch 1, dadurch gekennzeichnet, daß jede Lufteinlaßöffnung, auf die eine Reihe von Wandkühlkanälen zentriert ist, eine an ihren Austritt angrenzende Zone mit sprunghaft vergrößerter Querschnittsfläche (20) aufweist und daß die Wandkühlkanäle in diese Zone innerhalb einer jeweiligen Einlaßöffnung einmünden, wobei diese Anordnung so ausgelegt ist, daß jede durch Rückstau erzeugte Drosselung der Wandkühl- kanäle vermieden wird.

3. Brennkammer nach Anspruch 1, dadurch gekennzeichnet, daß jede Lufteinlaßöffnung (12), auf die eine Reihe von Wandkühlkanälen (13) zentriert ist, keinen direkten Kanal durch das Flammengehäuse aufweist, so daß die Auslaßmenge der jeweiligen Reihe von Wandkühlkanälen (13) die gesamte Auslaßmenge von der Einlaßöffnung (12) bildet.

4. Brennkammer nach einem der Ansprüche 1 bis 3, dadurch gekennzeichnet, daß das Feld der getrennten Wandkühl-kanäle (13) innerhalb des kopfseitigen Wandbereichs des Flammengehäuses (2) angeordnet ist.

5. Brennkammer nach Anspruch 4, dadurch gekennzeichnet, daß die Brennkammer eine "Pepperpot-Brennkammer" ist.

6. Brennkammer nach einem der Ansprüche 1 bis 5, dadurch gekennzeichnet, daß die Reihen der Wandkühlkanäle (13) jeweils zwei gegenüberliegende Gruppen von parallelen geradlinigen Kanälen, jeweils einen auf jeder Seite der jeweiligen Lufteinlaßöffnung aufweisen.

7. Brennkammer nach einem der Ansprüche 1 bis 5, dadurch gekennzeichnet, daß die Reihen der Wandkühlkanäle (13) jeweils eine speichenförmige auf eine jeweilige Lufteinlaßöffnung zentrierte Anordnung aufweisen.

8. Brennkammer nach Anspruch 7, dadurch gekennzeichnet, daß die speichenförmigen Reihen ein Spiralmuster beschreiben.

## Revendications

1. Chambre de combustion pour générateur d'énergie ou moteur de type turbine à gaz ou turbomoteur, cette chambre comportant au moins une enveloppe (2) de brûleur à l'intérieur d'une chemise (3) d'air refoulé et, entre elles, un îlot d'air, des lumières (12) d'entrée d'air formées dans cette enveloppe pour délivrer à son intérieur de l'air destiné à entretenir la combustion, stabiliser la flamme ou diluer les gaz chauds et des éléments (13) de refroidissement des parois couvrant au moins une surfacé limitée de l'enveloppe, surface sur laquelle les lumières sont réparties, chambre caractérisée en ce que les éléments de refroidissement de paroi comprennent un champ de canaux (13) de refroidissement distincts disposés en jeux, chacun de ces jeux étant centré sur une lumière (12) d'entrée d'air respective et étant disposé autour d'elle, le champ étant disposé globalement de façon que les divers jeux soient bout-à-bout avec des jeux voisins ou soient imbriqués avec eux et chaque canal (13) suivant un trajet oblique dans la paroi (11) de l'enveloppe de brûleur, entre un orifice (17) d'entrée à l'extérieur de cette enveloppe (2) et un orifice (18) de sortie dans la lumière (12) respective, l'air qui sort de chaque jeu de canaux de refroidissement contribuant au débit d'air de sa lumière de sortie ou constituant entièrement ce débit.

2. Chambre de combustion selon la revendication 1, caractérisée en ce que chaque lumière d'entrée d'air, sur laquelle un jeu de canaux de refroidissement est centré, comporte une zone (20) adjacente à sa sortie dont la section est brusquement agrandie, et en ce que les canaux de refroidissement de paroi débouchent dans cette zone à l'intérieur de la lumière respective, l'agencement étant réalisé de façon à empêcher tout engorgement des canaux provoqué par une contre-pression.

3. Chambre de combustion selon la revendication 1, caractérisée en ce que chaque lumière (12) d'entrée d'air, autour de laquelle un jeu de canaux (13) de refroidissement est centré, est dépourvue de passage direct traversant l'enveloppe de brûleurs, de sorte que l'air qui sort des canaux (13) du jeu respectif constitue la totalité de l'air débité par cette lumière (12).

8

4. Chambre de combustion selon l'une quelconque des revendications 1 à 3, caractérisée en ce que le champ des divers canaux (13) de refroidissement se trouve dans la partie de fond de la paroi de l'enveloppe (2) de brûleur.

5. Chambre de combustion selon la revendication 4, caractérisée en ce qu'elle est du type en poivrière.

6. Chambre de combustion selon l'une quelconque des revendications 1 à 5, caractérisée en ce que chacun des jeux de canaux (13) de refroidissement est composé de deux groupes opposés de canaux rectilignes et parallèles, un de chaque côté de la lumière respective.

7. Chambre de combustion selon l'une quelconque des revendications 1 à 5, caractérisée en ce que les canaux (13) de refroidissement de chaque jeu ont une disposition radiale, centrée sur une lumière d'entrée d'air respective.

8. Chambre de combustion selon la revendication 7, caractérisée en ce que les canaux radiaux des jeux forment un motif en spirale.

Fig.1.

Fig.2.

FIGURE 3A

20    16    18    13    17

FIGURE 3B

20    18    17    16

*Fig.4A.*

*Fig.4B.*

*Fig.5.*

*Fig.6.*

*Fig.7.*